# EUROPÄISCHE PATENTSCHRIFT

(11) **EP 1 762 429 B1**
(45) Veröffentlichungstag und Bekanntmachung des Hinweises auf die Patenterteilung: **09.11.2011**
(21) Anmeldenummer: 05108192.5
(22) Anmeldetag: 07.09.2005
(51) Int. Cl.: B60Q 1/04, B60Q 1/068, F16C 11/06

(54) **Befestigungsvorrichtung**
Fastening device
Dispositif de fixation

(43) Veröffentlichungstag der Anmeldung: 14.03.2007
(73) Patentinhaber: Hella KGaA Hueck & Co., 59552 Lippstadt (DE)
(72) Erfinder: Derckum, Jörg, 59590 Geseke (DE); Seiger, Ralf, 59556 Lippstadt (DE)

(56) Entgegenhaltungen:
- EP-A- 0 502 405
- EP-A- 0 557 697
- DE-A1- 4 034 256
- US-A- 5 615 939

## Beschreibung

Die Erfindung betrifft eine Befestigungsvorrichtung für eine verstellbare, aus Kunststoff hergestellte Reflektoreinheit eines Kraftfahrzeugscheinwerfers, die mit einem feststehenden Aufnahmeteil verbindbar ist, mit einem zwischen der Reflektoreinheit und dem Aufnahmeteil angeordneten Verbindungskörper, der an der Reflektoreinheit mittelbar oder unmittelbar gelenkartig, schwenkbar befestigt ist.

Aus dem Stand der Technik sind diverse Befestigungsvorrichtungen für Kraftfahrzeugscheinwerfer bekannt. Diese müssen zum Einen einen zuverlässigen Halt des Kraftfahrzeugscheinwerfers für diverse Beanspruchungen gewährleisten.

Zum Anderen muss eine Verstellbarkeit der Reflektoreinheit möglich sein, die beispielsweise im Rahmen der Leuchtweitenregelung durchgeführt wird. In der DE 39 13 152 C1 ist beispielsweise ein Scheinwerfer für Fahrzeuge beschrieben, der einen aus Kunststoff hergestellten Reflektor aufweist, der mit einem Aufnahmeteil um mindestens eine Achse verstellbar verbunden ist. Die Verbindung des Reflektors mit dem Aufnahmeteil ist von einem an das Aufnahmeteil angebrachten ersten Verbindungskörper und einem aus Kunststoff bestehenden zweiten Verbindungskörper gebildet, der an einem an die Rückseite der Reflexionsschale des Reflektors einstückig angeformten Wandungsteil mit ebenen breiten Seitenflächen befestigt ist. Nachteiligerweise ist bei der beschriebenen Vorrichtung der Montageprozess der Reflektoreinheit an das feststehende Aufnahmeteil aufwendig.

Eine Befestigungsvorrichtung für eine verstellbare Reflektoreinheit ist auch aus US 5 615 939 bekannt.

Zum allgemeinen Verständnis wird noch auf die DE 35 43 563 C1 und die DE 44 11 014 C1 hingewiesen.

Es ist Aufgabe der vorliegenden Erfindung, eine Befestigungsvorrichtung bereitzustellen, bei der die genannten Nachteile vermieden werden, insbesondere eine Befestigungsvorrichtung für eine verstellbare Reflektoreinheit geschaffen wird, die einfach gestaltet ist und ohne erheblichen Aufwand mit geringer Handarbeit oder sogar vollautomatisiert montiert werden kann.

Zur Lösung dieser Aufgabe wird eine Befestigungsvorrichtung mit den Merkmalen des Anspruches 1 vorgeschlagen. In den abhängigen Ansprüchen sind bevorzugte Weiterbildungen ausgeführt.

Und dazu ist erfindungsgemäß vorgesehen, dass der Verbindungskörper an der der Reflektoreinheit abgewandten Seite zum Aufnahmeteil gerichtete Führungsmittel aufweist, die als Montagehilfe bei der Befestigung der Reflektoreinheit am feststehenden Aufnahmeteil wirken. Während des Montageprozesses wird die Reflektoreinheit in Richtung des feststehenden Aufnahmeteils geführt, wobei die Führungsmittel einen Falscheinbau weitestgehend verhindern. Die am Verbindungskörper angeordneten Führungsmittel ermöglichen einen sicheren Blindmontageprozess, wobei gleichzeitig alle erforderlichen kinematischen Bewegungsabläufe der Reflektoreinheit in Hinblick auf die Leuchtweitenregulierung sowie die Scheinwerfergrundeinstellung gewährleistet sind. Bei der vorliegenden Erfindung dienen die Führungsmittel dazu, dass das freie Ende des feststehenden Aufnahmeteils, welches der Reflektoreinheit zugewandt ist, während der Montage in den Verbindungskörper geführt wird. Vorzugsweise ist das Führungsmittel trichterartig ausgeführt. Der Trichter, der an dem dem Aufnahmeteil zugewandten freien Ende des Verbindungskörpers ausgeführt ist, weist einen Durchmesser auf, der in Richtung der Reflektoreinheit kleiner wird. Vorteilhafterweise weist der Trichter eine ringförmige Berührungsfläche auf, die das Aufnahmeteil während des Montagesprozesses kontaktieren kann und zuverlässig in den Verbindungskörper gleitet.

Besonders vorteilhaft ist, dass der Verbindungskörper Begrenzungsmittel umfasst, die den möglichen Schwenkwinkel des Verbindungskörpers einschränken. Der Verbindungskörper ist hierbei gelenkartig an der Reflektorseite befestigt, wobei der Verbindungskörper in diverse Richtungen schwenkbar ist. Der Befestigungspunkt des Verbindungskörpers an der Reflektorseite gleicht hierbei einem Gelenk. Im nicht eingesetzten Zustand der Reflektoreinheit kann der Verbindungskörper an diesem Gelenk leicht verschwenkt werden. Die Begrenzungsmittel stellen jedoch in dieser Erfindung sicher, dass eine zu große Taumelbewegung des Verbindungskörpers verhindert wird, um eine sichere, möglichst lineare Blindmontage zu gewährleisten.

Vorzugsweise liegt der Schwenkwinkel α des Verbindungskörpers zwischen -20°≤ α ≤ +20°. Es hat sich gezeigt, dass ein derartig gewählter Schwenkwinkel einen zuverlässigen Montageprozess sicherstellt, ohne das Aufnahmeteil während der Montage zu verfehlen.

Gemäß der Erfindung weist der Verbindungskörper an der dem Trichter abgewandten Seite eine Kugel auf, die in einem Aufnahmebereich reflektorseitig positioniert ist. Der Aufnahmebereich ist als Gelenkpfanne ausgebildet, so dass die in der Gelenkpfanne aufgenommene Kugel mit Verbindungskörper gelenkartig verschwenkt werden kann.

In einer weiteren Ausgestaltung der vorliegenden Erfindung kann an der Reflektoreinheit ein Zwischenmodul befestigt sein, das mit dem genannten Aufnahmebereich ausgebildet ist. Bei dieser Ausführungsform der Erfindung ist der Verbindungskörper, der vorzugsweise ein Spritzgussteil aus Kunststoff ist, über das Zwischenmodul mittelbar mit der Reflektoreinheit verbunden. Selbstverständlich ist ebenfalls eine unmittelbare Anordnung des Verbindungskörpers an der Reflektoreinheit möglich.

Zweckmäßigerweise ist das Begrenzungsmittel als umlaufender Anschlag ausgeführt, der zwischen der Kugel und dem Trichter angeordnet ist, wobei der Anschlag einen Abstand zum Aufnahmebereich aufweist. Vorzugsweise ist der Abstand zwischen dem Anschlag und der dem Verbindungskörper zugewandten Wandung des Aufnahmebereiches geringer als 2 mm, besonders bevorzugt ist dieser genannte Abstand geringer als 1 mm. Der Anschlag sowie der entsprechend klein gewählte Abstand zwischen dem Anschlag und dem Aufnahmebereich stellen sicher, dass der Schwenkwinkel des Verbindungskörpers nicht überschritten wird.

Vorzugweise umfasst der Anschlag eine Stirnfläche, die dem Aufnahmebereich zugewandt ist. Der Verbindungskörper kann hierbei eine Nulllage aufweisen, bei der die Stirnfläche einen bestimmten Abstand zum Aufnahmebereich hat. Während der Montage kann sich der Verbindungskörper, insbesondere aufgrund der Schwerkraft im Rahmen des Schwenkwinkels bewegen, wodurch eine Taumelbewegung des Verbindungskörpers entstehen kann. Der Verbindungskörper kann erfindungsgemäß nur soweit verschwenkt werden, bis der Anschlag beziehungsweise die Stirnfläche des Anschlags die Wandung des Aufnahmebereiches berührt. Somit wird eine eingeschränkte Taumelbewegung des Verbindungskörpers an der Reflektoreinheit gewährleistet.

Vorzugsweise ist der Verbindungskörper, der einstückig mit dem Führungsmittel und/oder dem Begrenzungsmittel und/oder der Kugel verbunden sein kann, mit einem Aufnahmehohlraum ausgeführt, der sich an den Trichter anschließt. Vorteilhafterweise kann das feststehende Aufnahmeteil am freien, dem Verbindungskörper zugewandten Ende ein Verbindungselement aufweisen, das in den Aufnahmehohlraum einbringbar ist, wodurch eine form- und/oder kraftschlüssige Verbindung entsteht. Zweckmäßigerweise ist der Aufnahmehohlraum dem Verbindungselement entsprechend angepasst, so dass das Verbindungselement im eingesetzten Zustand gelenkartig bewegt werden kann. Die vorliegende Befestigungsvorrichtung weist somit ein Doppelgelenk auf. Das erste Gelenk wird durch die Kugel des Verbindungskörpers, die im Aufnahmebereich positioniert ist, gebildet. Das zweite Gelenk wird durch die Kugel des Verbindungselementes und den Aufnahmehohlraum des Verbindungskörpers gebildet. Hierdurch können alle erforderlichen Freiheitsgrade, die durch die kinematischen Bewegungsabläufe der Reflektoreinheit, beispielsweise durch die Scheinwerfergrundeinstellung und die Leuchtweitenregulierung benötigt werden, sichergestellt werden.

In einer bevorzugten Alternative der Erfindung sind das Verbindungselement des feststehenden Aufnahmeteils als Kugel und der Aufnahmehohlraum als Kugelpfanne ausgebildet. Vorteilhafterweise wird durch den Trichter sichergestellt, dass der Verbindungskörper vor der eigentlichen Befestigung am feststehenden Aufnahmeteil, welches beispielsweise durch eine Verrastung erfolgen kann, über die feststehende Kugel zentriert wird. Einer der wesentlichen Vorteile dieser Vorrichtung ist, dass aufwendige und fehlerträchtige Bewegungsabläufe bei der Fahrzeugscheinwerfermontage entfallen. Etwaig aufkommende Querkräfte, die radial bei der Leuchtweitenregulierung entstehen können, werden durch den erfindungsgemäßen, als eine Art Gelenkstück wirkenden Verbindungskörper entkoppelt. Durch Verschiebung des Anschlages und einer Anpassung des Trichterdurchmessers in Abhängigkeit von der erforderlichen Einstellkinematik des Kraftfahrzeugscheinwerfers sind selbstverständlich unterschiedliche Verbindungskörperlängen realisierbar.

In einer bevorzugen Alternative der Erfindung umfasst ein Adapterelement das Verbindungselement, wobei der Verbindungskörper in den Aufnahmehohlraum hineinragende Fixierungsmittel aufweist, die das Adapterelement am Verbindungselement nicht lösbar halten. Bei dieser Ausführungsform der Erfindung ist das Adapterelement mit einem Aufnahmehohlraum ausgebildet, in dem das Verbindungselement gelenkartig angeordnet ist. Während der Montage wird die Reflektoreinheit mit dem Verbindungskörper in Richtung des Adapterelements geführt. Befindet sich bereits das Adapterelement innerhalb des Aufnahmehohlraumes des Verbindungskörpers, kommt es in einer bevorzugten Ausführungsform der Erfindung zu einer Berührung der Außenfläche des Adapterelementes mit dem Fixierungsmittel. Die Fixierungsmittel sind hierbei elastisch ausgeführt. Während des Einsetzens des Adapterelementes in die Kugelpfanne der Aufnahmebohrung werden die Fixierungsmittel nach außen gedrückt, bis das Adapterelement in dem Aufnahmehohlraum einrastet und die Fixierungsmittel zurückspringen. Das Adapterelement und der Verbindungskörper gehen hierbei eine formschlüssige, nicht lösbare Verbindung ein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen:
- Figur 1: die erfindungsgemäße Befestigungsvorrichtung mit einer Reflektoreinheit, einem Verbindungskörper sowie einem Aufnahmeteil,
- Figur 2: eine alternative Ausführungsform der Erfindung, wobei das feststehende Aufnahmeteil an seinem freien Ende ein Adapterelement aufweist,
- Figur 3: die Befestigungsvorrichtung gemäß Figur 2, wobei der Verbindungskörper mit der Reflektoreinheit verbunden ist und
- Figur 4: eine dreidimensionale Explosionsdarstellung der Befestigungsvorrichtung gemäß Figur 2.

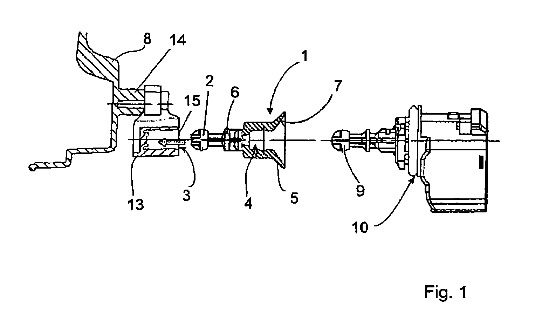

Figur 1 zeigt die erfindungsgemäße Befestigungsvorrichtung für eine verstellbare, aus Kunststoff hergestellte Reflektoreinheit 8 eines Kraftfahrzeugscheinwerfers. Die Reflektoreinheit 8 weist auf ihrer Rückseite einen Reflektoransatz 14 auf, der mit einem Zwischenmodul 13 verschraubt ist. Eine Verrastung ist ebenfalls möglich. Das Zwischenmodul 13 ist mit einem Aufnahmebereich 3 ausgeführt, in dem zumindest teilweise ein Verbindungskörper 1 einbringbar ist. Der Verbindungskörper 1 weist an der der Reflektoreinheit 8 zugewandten Seite eine Kugel 2 auf, die in den Aufnahmebereich 3 des Zwischenmoduls 13 einbringbar ist. Der Aufnahmebereich 3 weist auf einer Seite eine Öffnung 15 auf, durch die die Kugel 2 des Verbindungskörpers 1 hindurch führbar ist. An der der Öffnung 15 gegenüberliegenden Seite ist der Aufnahmebereich 3 als eine Art Kugelpfanne ausgeführt, so dass die Kugel 2 im eingesetzten Zustand gelenkartig verschwenkt werden kann.

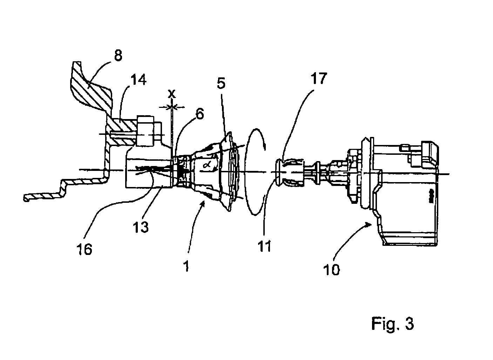

Der Verbindungskörper 1 weist des Weiteren Führungsmittel 5 auf, die trichterartig ausgeführt sind. Zwischen der Kugel 2 und dem Trichter 5 ist ein umlaufender Anschlag 6 ausgeführt, der im eingesetzten Zustand einen geringen Abstand x zur Wandung des Zwischenmoduls 13 aufweist. Der geringe Abstand x ist in Figur 3 mit x angedeutet. Im vorliegenden Ausführungsbeispiel ist der Abstand x geringer als 1 mm.

Wie aus Figur 1 zu entnehmen ist, weist der Verbindungskörper 1 einen Aufnahmehohlraum 4 auf, in dem ein Verbindungselement 9 eines feststehenden Verbindungsteils 10 einbringbar ist. Das Verbindungselement 9 ist hierbei als Kugel und der Aufnahmehohlraum 4 als Kugelpfanne ausgebildet. Während des Montageprozesses sind die Reflektoreinheit 8 sowie der Verbindungskörper 1 miteinander verbunden und bilden die Reflektormontagegruppe. Das feststehende Aufnahmeteil 10 ist hingegen durch die Gehäusemontagegruppe gebildet, die beispielsweise einen nicht explizit dargestellten Leuchtweitenregulierungssteller aufweisen kann, wodurch eine Verstellung der Reflektoreinheit 8 bewirkbar ist.

Der umlaufende Anschlag 6 am Verbindungskörper 1 wirkt als Begrenzungsmittel, damit der Verbindungskörper 1 lediglich innerhalb eines Schwenkwinkels α bewegt werden kann, welches exemplarisch in Figur 3 dargestellt ist. Der Verbindungskörper 1 gemäß Figur 3 kann eine Taumelbewegung um den fiktiven Gelenkpunkt 16 durchführen, wodurch der Montageprozess wesentlich vereinfacht werden kann. Der Trichter 5, der an der der Kugel 2 gegenüberliegenden Seite des Verbindungskörpers 1 angeordnet ist, wirkt als zusätzliche Montagehilfe bei der Befestigung der Reflektoreinheit 8 am feststehenden Aufnahmeteil 10. Im vorliegenden Ausführungsbeispiel kann der Schwenkwinkel α des Verbindungskörpers 1 zwischen -20°≤ α ≤ +20° liegen. Hierdurch wird eine sichere, weitestgehend lineare Blindmontage gewährleistet, welches gleichzeitig mit einer starken Vereinfachung des Montageprozesses zwischen der Reflektormontagegruppe und der Gehäusemontagegruppe verbunden ist. Für die begrenzte Bewegungsfreiheit des Verbindungskörpers 1 ist unter anderem der geringe Abstand zwischen dem Anschlag 6 und der Wandung des Zwischenmoduls 13 verantwortlich. Je geringer der Abstand x ist, desto geringer ist der mögliche Schwenkwinkel α des Verbindungskörpers 1.

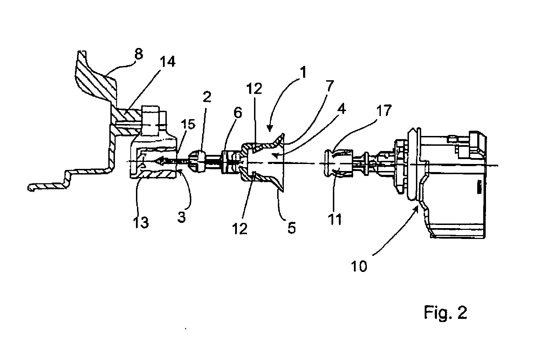

Gemäß Figur 2 ist eine Alternative der erfindungsgemäßen Befestigungsvorrichtung dargestellt, die im Wesentlichen der Ausführungsform aus Figur 1 entspricht, so dass im Folgenden nur auf die wesentlichen Unterschiede eingegangen wird. Im Gegensatz zum Ausführungsbeispiel gemäß Figur 1 wird die Kugel 9 des Verbindungsteils 10 durch ein Adapterelement 11 umfasst. Der Aufnahmehohlraum 4 des Verbindungskörpers 1 ist im Wesentlichen der Form des Adapterelementes 11 angepasst. Hierbei weist der Verbindungskörper 1 in dem Aufnahmehohlraum 4 hineinragende Fixierungsmittel 12 auf, die elastisch beim Hineinführen des Adapterelementes 11 nach außen bewegbar sind. Im eingesetzten Zustand befindet sich das Adapterelement 11 in einem Formschluss innerhalb des Aufnahmehohlraumes 4. Das Adapterelement 11 ist mit einer Nut 17 ausgeführt, die die Mantelfläche des Adapterelements 11 umläuft. Ausgehend von der Nut 17 in Richtung des Verbindungskörpers 1 nimmt der Durchmesser des Adapterelementes 11 zunächst zu und verjüngt sich anschließend an seinem freien Ende. Durch eine derartige Ausgestaltung des Adapterelements 11 und der entsprechenden Gestaltung des Aufnahmehohlraumes 4 wird ein zuverlässiges Einrasten des Adapterelements 11 innerhalb des Verbindungskörpers 1 ermöglicht, welches eine zufriedenstellende Befestigung darstellt.

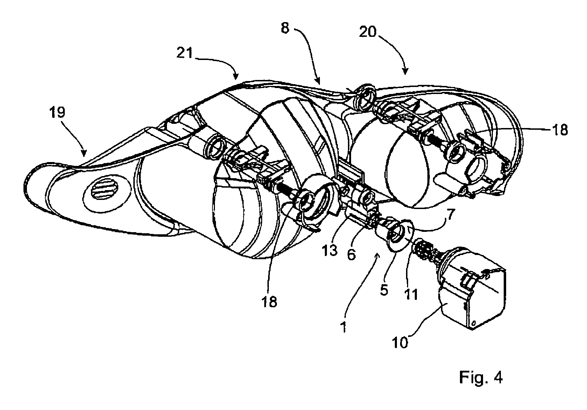

Die nicht sichtbare Kugel 9 des Verbindungsteils 10 ist in einer Kugelpfanne des Adapterelementes 11 aufgenommen, wodurch an dieser Stelle eine gelenkartige Bewegung des Verbindungskörpers 1 möglich ist. Figur 4 zeigt die Befestigungsvorrichtung gemäß Figur 2 und 3, wobei die Rückseite der Reflektoreinheit 8 komplett dargestellt ist. Die Reflektoreinheit 8 ist an ihrem oberen Bereich mit zwei Einstellungsvorrichtungen 18 versehen, die für die Scheinwerfergrundeinstellung verwendet werden. Die vorliegende Reflektoreinheit 8 weist eine Fernlichteinheit 20 auf. Des Weiteren umfasst die Reflektoreinheit 8 einen mittig angeordneten Hauptscheinwerfer 21, der als ein Xenonschwenkmodulscheinwerfer ausgebildet sein kann.

Selbstverständlich kann die vorliegende Erfindung auf weitere, nicht beschriebene Reflektoreinheiten 8 bezogen werden, beispielsweise die einen Hauptscheinwerfer 21, eine Fernlichteinheit 20 sowie eine Kurvenlichteinheit im Bereich 19 aufweisen.

### Bezugszeichenliste

- 1: Verbindungskörper
- 2: Kugel
- 3: Aufnahmebereich
- 4: Aufnahmehohlraum
- 5: Führungsmittel, Trichter
- 6: Limitierungsmittel, Anschlag
- 7: Berührungsfläche
- 8: Reflektoreinheit
- 9: Verbindungselement, Kugel
- 10: Aufnahmeteil
- 11: Adapterelement
- 12: Fixierungsmittel
- 13: Zwischenmodul
- 14: Reflektoransatz
- 15: Öffnung
- 16: Gelenkpunkt
- 17: Nut
- 18: Einstellungsvorrichtung
- 19: Kurvenlicht
- 20: Fernlicht
- 21: Hauptscheinwerfer

## Patentansprüche

1. Befestigungsvorrichtung zur Befestigung einer aus Kunststoff hergestellten Reflektoreinheit (8) eines Kraftfahrzeugscheinwerfers an einem feststehenden Aufnahmeteil (10), mit einem zwischen der Reflektoreinheit (8) und dem Aufnahmeteil (10) angeordneten Verbindungskörper (1), wobei zwischen dem Verbindungskörper (1) und der Reflektoreinheit (8) eine Gelenkverbindung und zwischen dem Verbindungskörper (1) und dem Aufnahmeteil (10) eine Gelenkverbindung vorgesehen ist,
**dadurch gekennzeichnet, dass**
- der Verbindungskörper (1) an der der Reflektoreinheit (8) abgewandten Seite zum Aufnahmeteil (10) gerichtete trichterartig ausgeführte Führungsmittel (5) aufweist, wobei
- der Verbindungskörper (1) an der dem trichterartigen Führungsmittel (5) abgewandten Seite eine Kugel (2) aufweist, die in einem als Gelenkpfanne ausgebildeten Aufnahmebereich (3) reflektorseitig positioniert ist, derart, dass die Kugel (2) mit dem Verbindungskörper (1) gelenkartig verschwenkt werden kann und wobei
- der Verbindungskörper (1) ein Begrenzungsmittel (6) aufweist, das als umlaufender Anschlag (6) ausgeführt ist und das zwischen der Kugel (2) und den trichterartigen Führungsmitteln (5) angeordnet ist, wobei das Begrenzungsmittel (6) einen möglichen Schwenkwinkel (α) des Verbindungskörpers (1) einschränkt.

2. Befestigungsvorrichtung nach Anspruch 1,
**dadurch gekennzeichnet,**
**dass** der Schwenkwinkel (α) des Verbindungskörpers (1) -20°≤ α ≤ +20° beträgt.

3. Befestigungsvorrichtung nach Anspruch 1 oder 2,
**dadurch gekennzeichnet,**
**dass** das trichterartige Führungsmittel (5) im Durchmesser in Richtung der Reflektoreinheit (8) kleiner wird.

4. Befestigungsvorrichtung nach Anspruch 3,
**dadurch gekennzeichnet,**
**dass** der Verbindungskörper (1) mit einem Aufnahmehohlraum (4) ausgeführt ist, der sich an den Trichter (5) anschließt.

5. Befestigungsvorrichtung nach Anspruch 4,
**dadurch gekennzeichnet,**
**dass** das Aufnahmeteil (10) am freien, dem Verbindungskörper (1) zugewandten Ende ein Verbindungselement (9) aufweist, das in den Aufnahmehohlraum (4) einbringbar ist, wodurch eine form- und/oder kraftschlüssig Verbindung entsteht.

6. Befestigungsvorrichtung nach Anspruch 5,
**dadurch gekennzeichnet,**
**dass** das Verbindungselement (9) als Kugel (9) und der Aufnahmehohlraum (4) mit einer Kugelpfanne (4) ausgebildet sind.

7. Befestigungsvorrichtung nach Anspruch 6,
**dadurch gekennzeichnet,**
**dass** der Anschlag (6) einen Abstand zum Aufnahmebereich (3) aufweist, wobei der Abstand geringer ist als 2 mm, vorzugsweise geringer ist als 1 mm.

8. Befestigungsvorrichtung nach einem der vorhergehenden Ansprüche,
**dadurch gekennzeichnet,**
**dass** ein Adapterelement (11) das Verbindungselement (9) umfasst, wobei der Verbindungskörper (1) in den Aufnahmehohlraum (4) hineinragende Fixierungsmittel (12) aufweist, die das Adapterelement (11) am Verbindungselement (9) nicht lösbar halten.

9. Befestigungsvorrichtung nach einem der vorhergehenden Ansprüche,
**dadurch gekennzeichnet,**
**dass** an der Reflektoreinheit (8) ein Zwischenmodul (13) befestigt ist, das mit dem Aufnahmebereich (3) ausgebildet ist.

10. Befestigungsvorrichtung nach einem der vorhergehenden Ansprüche,
**dadurch gekennzeichnet,**
**dass** der Verbindungskörper (1) einstückig mit dem Führungsmittel (5) und/oder dem Begrenzungsmittel (6) und/oder der Kugel (2) verbunden ist.

11. Kraftfahrzeugscheinwerfer mit einer Befestigungsvorrichtung nach einem der vorhergehenden Ansprüche.

## Claims

1. Fixation device for attaching a vehicle headlamp reflector unit (8) made of plastic on a fixed receptable (10), with a connection body (1) situated between reflector unit (8) and receptable (10), whereas provision is made for a jointed connection between the connection body (1) and the reflector unit (8) as well as the connection body (1) and the receptable (10),
**characterized in that**
- the connection body (1) shall have funnel-like designed guidings (5) at the side faced away from the reflector unit (8) and directed to the receptable (10), whereas
- the connection body (1) shall have a ball (2) at the side faced away from the funnel-like guiding (5); this ball shall sit in an receptable area (3) shaped as a joint socket at the reflector side in a way that the ball (2) shall be joint-like swivable with the connection body (1) and whereas
- the connection body (1) shall have a limiter (6) designed as circulating end stop (6) situated between the ball (2) and the funnel-like guidings (5), whereas the limiter (6) shall limit the possible swivel angle (α) of the connection body (1).

2. Fixation device according to Claim 1,
**characterized in that**
the swivel angle (α) of the connection body (1) shall be -20°≤ α ≤ + 20°.

3. Fixation device according to Claims 1 or 2,
**characterized in that**
the diameter of the funnel-like guiding (5) shall decrease in direction to the reflector unit (8).

4. Fixation device according to Claim 3,
**characterized in that**
the connection body (1) shall have a receptable cavity (4) adjoined to the funnel (5).

5. Fixation device according to Claim 4,
**characterized in that**
at the exposed side facing towards the connection body (1), the receptable (10) shall have a connection element (9) introducible into the receptable cavity (4) which creates an interlocking and/or force-fit connection.

6. Fixation device according to Claim 5,
**characterized in that**
the connection element (9) shall be shaped as a ball (9) and the receptable cavity (4) shall have a ball socket (4).

7. Fixation device according to Claim 6,
**characterized in that**
the end stop (6) shall have a clearance to the receptable area (3), whereas this clearance shall be less than 2 mm, preferably less than 1 mm.

8. Fixation device according to one of the Claims listed above,
**characterized in that**
an adapter element (11) shall comprise the connection element (9), whereas the connection body (1) shall have fixation components (12) sticking out into the receptable cavity (4) which shall hold the adapter element (11) to the connection element (9) in an undetachable manner.

9. Fixation device according to one of the Claims listed above,
**characterized in that**
an intermediate module (13) shaped according to the receptable area (3) is attached to the reflector unit (8).

10. Fixation device according to one of the Claims listed above,
**characterized in that**
the connection body (1) shall integrally be connected to the guiding (5) and/or the limiter (6) and/or the ball (2) in one piece.

11. Vehicle headlamp with a fixation device according to one of the Claims listed above.

## Revendications

1. Dispositif de fixation pour la fixation d'un ensemble réflecteur en plastique (8) d'un projecteur pour véhicule sur une pièce de logement fixe (10) avec un corps de jonction (1) disposé entre l'ensemble réflecteur (8) et la pièce de logement (10), une articulation étant prévue entre le corps de jonction (1) et l'ensemble réflecteur (8) et une autre articulation étant prévue entre le corps de jonction (1) et la pièce de logement (10),
**caractérisé en ce que**
- le corps de jonction (1) présente, sur le côté opposé à l'ensemble réflecteur (8), un moyen de guidage réalisé en forme d'entonnoir (5) dirigé vers la pièce de logement (10), **en ce que**
- le corps de jonction (1) présente, sur le côté opposé au moyen de guidage en forme d'entonnoir (5), une bille (2) qui est placée, côté du réflecteur, dans une zone de logement (3) réalisée en forme d'une cuvette à rotule de manière telle que la bille (2) puisse pivoter en s'articulant avec le corps de jonction (1) et **en ce que**
- le corps de jonction (1) présente un moyen de limitation (6) conçu en forme de butée périphérique (6) et disposé entre la bille (2) et les moyens de guidage en forme d'entonnoir (5), le moyen de limitation (6) limitant un éventuel angle de pivotement (α) du corps de jonction (1).

2. Dispositif de fixation suivant la revendication 1,
**caractérisé en ce que**
l'angle de pivotement (α) du corps de jonction (1) est compris dans l'intervalle de -20° à +20°, bornes incluses.

3. Dispositif de fixation suivant la revendication 1 ou 2,
**caractérisé en ce que**
le moyen de guidage en forme d'entonnoir (5) présente un diamètre de plus en plus petit en direction de l'ensemble réflecteur (8).

4. Dispositif de fixation suivant la revendication 3,
**caractérisé en ce que**
le corps de jonction (1) est réalisé avec une cavité de logement (4) qui se raccorde à l'entonnoir (5).

5. Dispositif de fixation suivant la revendication 4,
**caractérisé en ce que**
la pièce de logement (10) présente, à l'extrémité libre tournée vers le corps de jonction (1), un élément de jonction (9) qui peut être inséré dans la cavité de logement (4), formant ainsi un raccordement par liaison de forme et/ou de force.

6. Dispositif de fixation suivant la revendication 5,
**caractérisé en ce que**
l'élément de jonction (9) est réalisé sous forme de bille (9) et la cavité de logement (4), sous forme d'une cuvette de rotule (4).

7. Dispositif de fixation suivant la revendication 6,
**caractérisé en ce que**
la butée (6) présente un écartement par rapport à la zone de logement (3), l'écartement étant inférieur à 2 mm, de préférence inférieur à 1 mm.

8. Dispositif de fixation suivant l'une quelconque des revendications précédentes,
**caractérisé en ce qu'**
un élément adaptateur (11) entoure l'élément de jonction (9), le corps de jonction (1) présentant un moyen de blocage (12) débordant dans la cavité de logement (4) et qui maintient l'élément adaptateur (11) sur l'élément de jonction (9) de manière inamovible.

9. Dispositif de fixation suivant l'une quelconque des revendications précédentes,
**caractérisé en ce qu'**
un module intermédiaire (13) qui est réalisé avec une zone de logement (3) est fixé sur l'ensemble réflecteur (8).

10. Dispositif de fixation suivant l'une quelconque des revendications précédentes,
**caractérisé en ce que**
le corps de jonction (1) est assemblé en une pièce avec le moyen de guidage (5) et/ou le moyen de limitation (6) et/ou la bille (2).

11. Projecteur pour véhicule avec un dispositif de fixation suivant l'une quelconque des revendications précédentes.
